Europäisches Patentamt

(19) European Patent Office

Office européen des brevets

(11) Publication number: **0 190 810**
**A1**

(12) # EUROPEAN PATENT APPLICATION

(21) Application number: **86200182.3**

(22) Date of filing: **07.02.86**

(51) Int. Cl.⁴: **B 29 C 65/36**
**F 16 L 47/02, F 16 L 59/16**

(30) Priority: **08.02.85 DK 587/85**

(43) Date of publication of application:
**13.08.86 Bulletin 86/33**

(84) Designated Contracting States:
**AT BE CH DE FR GB IT LI NL SE**

(71) Applicant: **Dürotan Rör A/S**
**Brovadvej Erritsö**
**DK-7000 Fredericia(DK)**

(72) Inventor: **Buch, Jörgen**
**Vestergade 38**
**DK-5500 Middelfart(DK)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) **A method of joining plastic pipe ends and a connector sleeve for use therewith.**

(57) For the joining of plastic pipe ends (20) use is made of a slide connector sleeve (2) of plastic and of the type having at each end a heating coil (4) embedded in the inner surface of the sleeve, the coil windings being electrically heated to effect a welding together of the opposed surfaces. The invention provides for a slide sleeve (2) which is easy to displace into its position over the pipe ends (20) due to the inner sleeve diameter being noticeably larger than the outer diameter of the plastic pipes (14), and hereby the plastic pipes need not show particularly narrow tolerances. The sleeve ends are narrowed by cold deformation into contact with the outsides of the pipes such that a high welding pressure is built up before the welding coil (4) is activated. The coil (4) is bifilarily wound and is embedded in the inner sleeve surface so as to protrude partially therefrom, and it consists of zig-zag-shaped wire (6), which is able to participate in the narrowing of the sleeve end without the single windings bulging uncontrolled by the associated reduction of the peripheral length of the windings.

Fig. 2.

1

A Method of Joining Plastic Pipe Ends and a Connector
Sleeve for Use therewith.

The present invention relates to a method of
securing, by welding, a connector sleeve of plastic onto
opposed end portions of plastic pipes to be joined,
primarily in connection with the joining of heat insulated district heating pipe elements having outer protective mantle pipes of plastic, whereby the connector
sleeve is positioned with its opposite end portions
projecting over the respective opposed end portions of
the plastic pipes so as to be in surface contact with
the outside of the latter end portions, and whereby
the welding together of the thus interengaged end portions is effected by sending an electric current through
heating wire means located in or adjacent the respective
surface contact areas.

For the joining of medium conducting plastic pipe
elements it is well known to make use of a connector
sleeve fitting narrowly about the pipe ends to be
joined, such that the sleeve may be displaced axially
to cover both pipe ends and be weldable thereto merely
by sending an electric current through the said heating
wire means. Hereby a desired melting and melting together
of the interengaging surface portions will occur, but
the associated general heating of the opposed sleeve
end portions will produce the risk that the sleeve ends
are softened to such a degree that they are readily radially expansible or outwardly yieldable, such that they cannot maintain a desired steady mechanical pressure against the outsides of the plastic pipe ends to be joined. Normally, therefore, the connector sleeves or at least the end portions thereof are designed to show an extra heavy wall thickness, such that the required welding heating adjacent the interengaging surfaces will not result in any softening heating of the outermost layer of the sleeve material, whereby this layer will resist any expansion tendency of the sleeve and thus hold the sleeve end material in the required firm welding contact with the outer surface of the adjoining plastic pipe end portion.

It is hereby a condition that the inner diameter of the connector sleeve is closely adapted to the outer diameter of the plastic pipes, i.e. the respective elements should be produced rather accurately, and due to the required accuracy it may even be difficult to displace the sleeve over the joint from the pipe end, on which it is temporarily placed until the pipes are ready to be joined. It could be an obvious possibility to make use of a sleeve of increased diameter and then effect a radial compression of the heated sleeve end portions against the outside of the plastic pipe ends, whereby the production tolerances could be low and the mounting be facilitated; however, such a technique would imply several drawbacks, e.g. a narrowing of the heating wire coil such that the single windings thereof could bulge out and cause difficulties, e.g. by shorting against a neighbouring winding.

It is the purpose of the invention to provide a method whereby it is possible anyway to make qualified use of a connector sleeve having an inner diameter noticeable larger than the outer diameter of the plastic pipes, such that the said advantages of low tolerances and an easy mounting displacement will be achievable without compromizing even very high welding quality demands.

According to the invention the method is carried out as specified in the characterizing clause of claim 1. It is essential that the windings of the heating coil are shaped zig-zag-wise, because the windings may then be narrowed or compressed without the wire being bent out in any uncontrolled or damaging manner, and it is also important that the radial narrowing of the end portions of the connector sleeve is effected by cold deformation, such that the welding surface contact is established before the heating coil is activated, since a preheating of the sleeve ends for making them easily deformable would otherwise result in the formation of an oxidation layer on the heated interior sleeve surface, whereafter such a layer would make it difficult or impossible to obtain a high quality welding together of the sleeve ends and the plastic pipe ends. It is furthermore essential that substantially the entire narrowed end portion of the sleeve is heated to initial softening, viz. such that the cold deformed areas are stabilized in their narrowed shapes without later on showing significant expansion tendencies. For the same reason both the sleeve ends and the said clamp strap should project at least a suitable distance outside the outer ends of the heating coils, viz. such that the axially outermost material portions of the sleeve will well be heated to initial softening, but will still be held intact such that it will form a barrier against the flowing out of the melted material in the primary welding area adjacent the heating coil.

By these measures it is possible to produce a high quality welding, even though the sleeve tube, for a given dimension of low tolerance, should be used together with plastic pipes produced with an ordinary coarse tolerance, e.g. of some 4% for the outer diameter thereof. The additional use of the said cold deformation of the sleeve ends will inevitably cause increased joining costs, but these are by far compensated by the associated possibility of manufacturing both the sleeve tube and not least the plastic pipes with relatively very coarse tolerances. Besides, the mounting work is facilitated by the associated ability of the sleeve to be very easily insertable on the end of one of the plastic pipes to be joined and to be equally easily displaceable into its mounting position over the joint.

The invention also relates to a connector sleeve of plastic for use with the method so far disclosed, according to claims 2-5. According to claim 3 it is preferred that the zig-zag-disposed wire of the heating coil is located in the interior sleeve surface so as to be partially protruding therefrom, whereby the wire will come into a direct heating contact also with the surface of the plastic pipe end. This implies that the sleeve not only may, but shall have to be somewhat wider than the pipes, as the wire windings could otherwise be damaged by the displacement of the sleeves onto the pipe ends. Moreover, the partially protruding windings will act as spacer members between the surfaces to be joined, and it is necessary, therefore, to tighten up the clamp strap while the welding process goes on.

In the following the invention is described in more detail with reference to the drawing, in which

Fig. 1 is a perspective view of a connector sleeve according to the invention,

Fig. 2 is a lateral sectional view of a pipe joint including the said sleeve,

Fig. 3 is a more detailed sectional view of welding area prior to the start of the welding operation,

Fig. 4 is a corresponding view after the start of the welding operation,

Fig. 5 is a cross sectional view of the joint, and

Fig. 6 is a lateral view of a device for winding the wire coils as used in the sleeve.

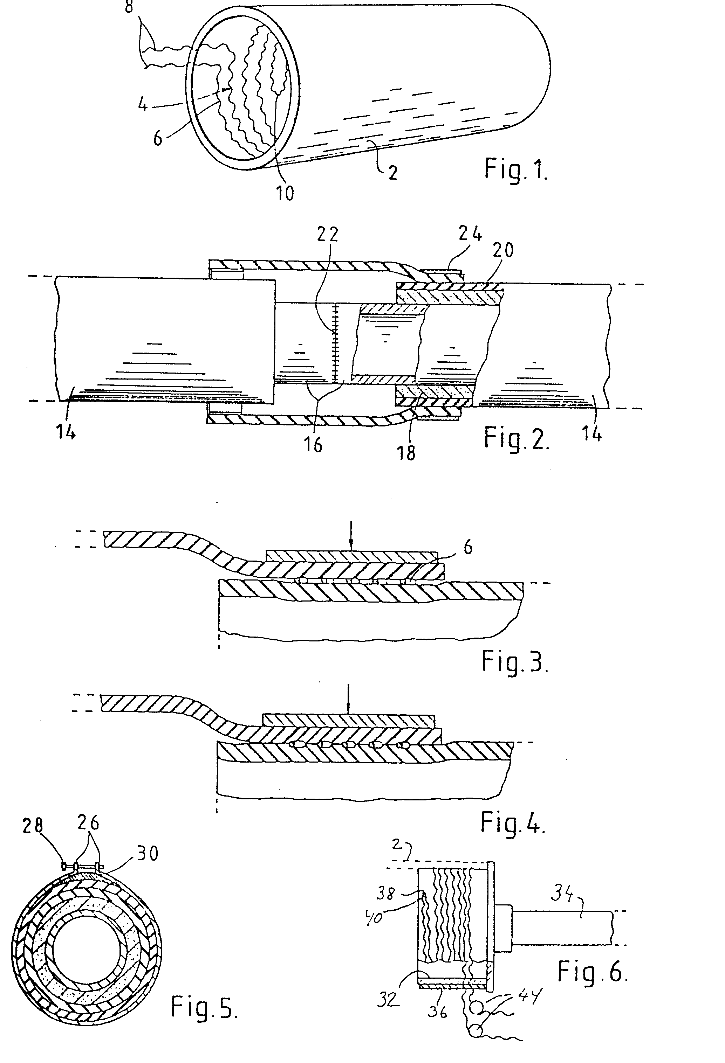

The connector sleeve shown in Fig. 1 consists of a tube 2 of thermoplastic material, e.g. PEL. At each end the tube 2 is provided with a copper wire coil 4 in or along the inner surface of the tube, the coil being made of a wire 6, which is stretched zig-zag-wise or sinuously in the cylindrical plane and is wound in a bifilary manner, viz. with two outer connector wires 8 and an inner turning point 10. The wire may be embedded directly in the inner surface of the tube or sleeve 2 or in a thin-walled carrier plastic bush 12 secured to the inside of the sleeve.

The sleeve 2 is used in the pipe joint illustrated in Fig. 2, which shows the ends of two district heating pipes 14 each comprising an inner conductor pipe 16, a surrounding insulation material 18 and an outer mantle pipe 20 of plastic. The conductor pipes 16 project beyond the surrounding materials, and their free ends joined by a welding 22, this welding being worked out while the sleeve 2 is located on the end portion of one of the pipes 14, retracted from the space between the ends of the plastic pipes 14. Thereafter, optionally upon an insulation material being laid around the free pipe ends 16, the sleeve is displaced axially to the position shown in Fig. 2, and as shown to the right a clamp strap 24 is then laid around the end portion of the sleeve, and this strap is tightened strongly, such that the sleeve end is deformed into contact with the outside of the plastic pipe 20. Preferably the strap is tightened to even produce some narrowing of the contact area of the pipe 20. As shown to the left in Fig. 2 the sleeve is initially clearly wider than the pipes 20, such that the sleeve is easy to displace axially.

After the cold narrowing of the sleeve end an electric current is sent through the coil 4, whereby the surface materials in the contact area melt and are welded together, whereafter the strap 24 is removed. Of course, the same operations are carried out at the other end of the sleeve, simultaneously or sequentially for the two ends.

It is shown in more detail in Fig. 3 that the wire 6 is mounted partly protruding from the inner surface of the sleeve 2, this being advantageous for obtaining a good heating contact with the surface of the pipe 20. However, because of the partially protruding wire the plastic surfaces will not initially, by the operation of the clamp strap 24, be pressed together, see Fig. 3, and it is essential, therefore, that the strap 24 be tightened up after the start of the heating of the coil 4, see Fig. 4.

The clamp strap 24 should be able to force the sleeve end portion radially inwardly absolutely all the way round, and in Fig. 5 it is shown by way of example that a strap may be used which has end portions 26, which may be forced against each other by means of a screw 28, while underneath this area there is inserted an arched base member 30, which will transfer and distribute the pressing forces adjacent the tightening area. The screw 28 could be replaced by a hydraulic cylinder or other suitable tightening means. Typically, in practice, the required narrowing pressure on the sleeve ends will be of the magnitude 10 tons, though of course depending of the circumstances.

As already mentioned the outer end of the heating coil 4 should be located somewhat spaced, normally 2-3 cm, from the associated outer end of the sleeve, such that the heated material will not be heated to melting all the way out to the end of the sleeve. The material in the welding zone adjacent the coil 4 is pressurized by the action of the clamp strap 24, and in its melted condition, therefore, it could easily be forced axially outwardly from the welding zone, in both axial directions, if it was not stopped by a barrier of non-melted material.

It is important, however, that all of the radially compressed sleeve end material be heated at least to initial softening, such that after the subsequent cooling of the material there will be no considerable expansion tendencies in the material, which might otherwise jeopardize the efficiency or durability of the welding joint. Due to this desired softening of all of the compressed material it is important that not only the sleeve end portion, but also the clamp strap 24 is wider than the coil 4, such that the strap will be able to hold the softened material as the said barrier against the pressing out of the more liquid material in the welding zone itself.

With the described method the sleeve end portion will be rapidly brought into close contact with the outside of the plastic pipe 20 once the heating of the coil 4 has started (Fig. 3-4), even before the respective plastic surfaces have been generally heated, and the following effective welding heating, therefore, will take place without the presence of air between or adjacent the surfaces to be welded together, whereby no disadvantageous oxidation of the surfaces will occur.

In the axial lead-out area of the connector wires 8 of the heating coil 4 the inner surface of the sleeve 2 will be extensively heated along these local areas, but experiments have shown that this heating is local enough to give rise to no problems with respect to an outflow of the melted material from the welding zone.

It is important that the coil 4 is bifilarily wound, such that any wire crossing problem is eliminated. It could be possible to make use of a series connection between the opposed end coils 4 of each sleeve 2, whereby the coils could be mono wound, but in practice such an arrangement has been found little advantageous.

It is extremely important that the wire 6 of the coil 4 stretches zig-zag-wise, such that the coil 4 together with the respective sleeve end may undergo a radial compression or narrowing to a considerably reduced diameter, without the single windings by the associated reduction of their peripheral length being forced to bulge out in some uncontrolled manner, which could give rise to both shortings and unduly increased spacings between neighbouring windings.

Theoretically the coil 4 could consist of a single winding of a broadly disposed meander shaped wire, which could well be compressible by the disclosed narrowing of the sleeve end, but the many axially extending wire portions of such a coil would imply correspondingly many potential channels for the intrusion of moisture from outside into the inner space of the pipe joint if or when the plastic material does not adhere firmly the surface of the heating wire. For the same reason it is important that the coil 4 is made as a multi winding coil, with its windings generally stretching across the axial direction of the assembly, such that any intrusion of moisture along the wire is hereby largely counteracted.

The zig-zag-shaped coil windings may be produced and mounted on the interior ends of the sleeve in various different manners, and by way of example only one such manner will now be described:

As shown in Fig. 6 a cylindrical mandrel 32 is mounted on a rotatable shaft 34, and as shown at the lower side of the mandrel a thin cylindrical plate or sheet member 36 of a thermoplastic material may be laid about the mandrel so as to constitute the above mentioned carrier bush 12. Adjacent its outer end the mandrel 32 is provided with a protruding, yet retractable pin 38 projecting outwardly through a corresponding hole in the plate member 36. A folded outer portion 40 of a double wire 42 as constituted by the wire 6 is hooked over the pin 38, and the mandrel is rotated and displaced axially, such that the double wire is wound rather tightly onto the cylindrical sheet member 36 from a non-illustrated wire supply system. The wire may be supplied in the axial direction via a pair of guiding pins or wheels 44, which may even, in a manner not shown, be shaped and arranged for cooperation with suitable counter pressure wheels in such a manner that a supplied straight wire will thereby be deformed into the desired zig-zag shape. Alternatively this shape of the wire can be produced by similar or other means prior to the wire being supplied to the winding station.

When the coil has been produced the guiding wheels 44 are removed and the pin 38 is retracted inwardly so as to just hold the wire end loop, without projecting beyond the plane thereof. Thereafter the end of a sleeve tube 2 as shown in dotted lines at the top of Fig. 6 is introduced over the mandrel, the various dimensions being adapted such that the inner diameter of the sleeve is only slightly larger than the outer diameter of the coil 4 as wound onto the mandrel or rather, in this embodiment, onto the cylindrical sheet 36 thereon. A clamp strap (not shown) is placed about the end portion of the sleeve 2 and is tightened so as to force the sleeve end radially against the coil 4. The coil is heated by electric current so as to become embedded in the inner sleeve surface and in the cylindrical sheet member 36 and so as to weld these elements together. Upon cooling of the parts and upon complete retraction of the pin 38 the sleeve end with the associated cylindrical sheet 36 and coil 4 is drawn off the mandrel 32.

Thus, in the finished sleeve the coil 4 will be covered inwardly by the cylindrical sheet member 36, but the thickness of the cover layer will be quite small, such that a good and rapid heating connection with the outside of the plastic pipes 20 will be achievable.

By an alternative and even preferred method of providing the sleeve end with a coil 4 the coil is wound directly on the mandrel 32 without the use of any carrier bush 36, and the coil is transferred directly to the inner surface of the sleeve by the said heating of the wire, whereby the narrowing of the sleeve end about the mandrel is controlled such that the wire will be only partially embedded in the sleeve surface, i.e. so as to protrude partially from the sleeve surface as shown in Fig. 3. For an efficient production it is important that the mandrel is designed or connectable with means for positive cooling of the mandrel as soon as the coil 4 has been welded into the sleeve surface. However, the invention is not limited to any specific manner of providing the sleeve end portions with the coils 4, so it is deemed unnecessary at this place to describe further possible methods or method steps.

CLAIMS:

1.     A method of securing by welding a connector sleeve of plastic onto opposed end portions of plastic pipes to be joined, primarily in connection with the joining of heat insulated district heating pipe elements having outer protective plastic mantle pipes, whereby the connector sleeve is positioned with its opposite end portions projecting over the respective opposed end portions of the plastic pipes so as to be in surface contact with the outside of the latter end portions, and whereby the welding together of the thus interengaged end portions is effected by sending an electric current through heating wire means located in or adjacent the respective surface contact areas, characterized by the use of a connector sleeve, the inner diameter of which is noticeably larger than the outer diameter of the plastic pipes, and the respective inner end surfaces of which is provided with a bifilary heating wire coil, which is located immediately adjacent or in the inner sleeve surface spaced at least 1-2 cm from the respective end of the sleeve and consists of a plurality of windings of a wire which is zig-zagging in the respective cylindrical surface, the sleeve end portions, upon the sleeve being placed in its mounting position, being subjected to a radially inwardly directed mechanical pressure for cold deformation of the sleeve end portions in order to produce said surface contact, preferably at a radial pressure high enough to condition a narrowing of even the plastic pipe end portions; for producing the radial deformation pressure at each end a clamp strap is used, which covers the coil area of the sleeve and an additional area thereof at least 1-2 cm outside the outer end of the coil area, and the heating coil is then activated for effecting the welding and for heating substantially the entire narrowed end portion of the sleeve sufficiently for initial softening thereof, whereafter the end portion is allowed to cool before the clamp strap is removed.

2. A connector sleeve of plastic for use with the method according to claim 1, consisting of a plastic tube having at each end a heating coil mounted adjacent its interior surface, characterized in that the wire of the multi winding heating coil is arranged so as to project zig-zag-wise in its cylindrical mounting plane.

3. A connector sleeve according to claim 2, characterized in that the wire is secured to the interior surface of the sleeve in a radially inwardly exposed manner, preferably partly protruding from said surface.

4. A connector sleeve according to claim 2, characterized in that the outermost winding of the heating coil is located at least 1-2 cm, preferably at least 2,5 cm, inside the respective outer end of the sleeve.

5. A connector sleeve according to claim 2, characterized in that the heating coil at each end of the sleeve is arranged in a bifilary manner with a closed inner end and with the free coil wire ends projecting axially outwardly from the outer end of the coil.

1/1

0190810

8

4

6

10

2

Fig.1.

22    24    20

14    16    18    14    Fig.2.

6

Fig.3.

Fig.4.

28  26

30

Fig.5.

2

38
40

34

32    36    44    Fig.6.

## DOCUMENTS CONSIDERED TO BE RELEVANT

| Category | Citation of document with indication. where appropriate, of relevant passages | Relevant to claim | CLASSIFICATION OF THE APPLICATION (Int Cl 4) |
|---|---|---|---|
| A | WO-A-8 403 346 (ANIA B.V.) * Figure; page 2, line 37 - page 3, line 33 * | 1-5 | B 29 C 65/36<br>F 16 L 47/02<br>F 16 L 59/16 |
| A | FR-A-2 522 389 (R.G. SLOANNE MANUFACTURING CO.) * Figures 1-3; page 4, lines 11-25; page 10, lines 3-27 * | 1-5 | |
| A | EP-A-0 008 912 (UBE INDUSTRIES LTD./ THE FURUKAWA CO., LTD.) * Abstract; claim 9 * | 2 | |
| A | CH-A- 585 367 (C. MELDEM) * Figures 1,2; column 1, lines 49-64; column 2, lines 6-50 * | 1,2,4 | |
| A | EP-A-0 075 901 (VON ROLL AG) * Abstract * | 1,2,4 | **TECHNICAL FIELDS SEARCHED (Int. Cl.4)** |
| A | DE-A-1 291 109 (TECALEMIT GmbH) * Claims 1,4 * | 2 | B 29 C<br>F 16 L |

The present search report has been drawn up for all claims

| Place of search | Date of completion of the search | Examiner |
|---|---|---|
| THE HAGUE | 28-04-1986 | NARMINIO A. |